(19) Europäisches Patentamt / European Patent Office / Office européen des brevets

(11) **EP 1 386 287 B1**

(12) **EUROPÄISCHE PATENTSCHRIFT**

(45) Veröffentlichungstag und Bekanntmachung des Hinweises auf die Patenterteilung:
**07.03.2007 Patentblatt 2007/10**

(21) Anmeldenummer: **02740241.1**

(22) Anmeldetag: **08.04.2002**

(51) Int Cl.:
**G06T 3/00** (2006.01)

(86) Internationale Anmeldenummer:
**PCT/DE2002/001276**

(87) Internationale Veröffentlichungsnummer:
**WO 2002/089059 (07.11.2002 Gazette 2002/45)**

(54) **BILDVERARBEITUNGSVERFAHREN**

IMAGE PROCESSING METHOD

PROCEDE DE TRAITEMENT D'IMAGE

(84) Benannte Vertragsstaaten:
**DE FI GB**

(30) Priorität: **25.04.2001 DE 10120286**

(43) Veröffentlichungstag der Anmeldung:
**04.02.2004 Patentblatt 2004/06**

(73) Patentinhaber: **SIEMENS AKTIENGESELLSCHAFT
80333 München (DE)**

(72) Erfinder: **OLIVAN LOPEZ, Javier
80797 München (DE)**

(56) Entgegenhaltungen:
**EP-A- 0 625 762        GB-A- 2 312 123**

- QUOC VU ET AL: "A fast warping algorithm for correcting local distortions in binary images" PROCEEDINGS OF THE INTERNATIONAL CONFERENCE ON IMAGE PROCESSING (ICIP) LAUSANNE, SEPT. 16 - 19, 1996, NEW YORK, IEEE, US, Bd. 1, 16. September 1996 (1996-09-16), Seiten 209-212, XP010202631 ISBN: 0-7803-3259-8
- WITTENBRINK C M ET AL: "2D AND 3D OPTIMAL PARALLEL IMAGE WARPING1" JOURNAL OF PARALLEL AND DISTRIBUTED COMPUTING, ACADEMIC PRESS, DULUTH, MN, US, Bd. 25, Nr. 2, 1. März 1995 (1995-03-01), Seiten 197-208, XP000492661 ISSN: 0743-7315

**Beschreibung**

Die Erfindung betrifft ein Bildverarbeitungsverfahren zur optischen Anzeige von Informationen und/oder Signalen, wobei ein Quellbild in ein demgegenüber deformiertes Zielbild transformiert wird.

Derartige Verfahren, wie z.B. in GB-A-2 312 123 beschrieben, sind unter dem Begriff "Warping"-Algorithmen bekannt und werden zur Deformation von Bildern eingesetzt. Dabei wird üblicherweise als "Warping"-Maske ein Polygonnetz zugrundegelegt. Da es dazu der Bereitstellung von Vektorscharen bedarf, handelt es sich dabei um komplizierte Techniken, die naturgemäß einen großen Speicherplatzbedarf haben und somit auch rechenintensiv sind. Dadurch sind die herkömmlichen Verfahren nach dem Stande der Technik praktisch nur in größeren Rechenanlagen, sog. "Workstations" oder dergleichen, nutzbar.

Der Erfindung liegt demgegenüber die Aufgabe zugrunde, ein Bildverarbeitungsverfahren der eingangs genannten Art zu schaffen, das gegenüber dem Stand der Technik einen geringeren Speicherplatzbedarf aufweist und damit auch in Mikroprozessor-gestützten Kleingeräten mit relativ kleinen Datenspeichermodulen, wie dies beispielsweise bei Mobiltelefonen der dergleichen der Fall ist, einsetzbar ist.

Die Aufgabe wird in verfahrenstechnischer Hinsicht dadurch gelöst, daß in einer Initialisierungsphase innerhalb des Quellbildes ein eine Deformationsrichtung bestimmender Deformationsvektor definiert wird und daß für die jeweiligen Bildpixel des Quellbildes nach Maßgabe einer von diesem Vektor und eines die Lage der jeweiligen Bildpixel in Relation zu diesem Vektor berücksichtigenden Skalierungsfaktors funktional abhängigen Transformationsvorschrift jeweils eine korrespondierende Koordinatenposition in dem Zielbild ermittelt wird.

Während herkömmliche Verfahren aufgrund der Bereitstellung von Vektorfeldern besonders speicherplatz- und rechenintensiv sind und demgemäß praktisch nur auf größeren Computern ("Workstations") einsetzbar sind und zufriedenstellende Resultate erzielen, benötigt demgegenüber das erfindungsgemäße Verfahren relativ wenig Speicherplatz aufgrund eines einzigen die Deformationsrichtung festlegenden Vektors und ist somit auch für relativ kleine Speichermodule, wie sie typischerweise in Mobiltelefonen eingesetzt werden, geeignet.

Eine bevorzugte Ausführungsform des erfindungsgemäßen Bildverarbeitungsverfahrens besteht darin, daß dem Skalierungsfaktor ein im wesentlichen elliptischer Funktionsverlauf derart zugeordnet wird, daß sich der Deformationsvektor ungefähr zwischen den Brennpunkten des elliptischen Funktionsverlaufs erstreckt. Im Gegensatz zum Stand der Technik, mit dessen Polygonmethode eckige Konturen im Zielbild entstehen, werden gemäß der Erfindung demgegenüber runde Strukturen im Zielbild erzielt, so daß sich das erfindungsgemäße Verfahren besonders für Quellbilder eignet, die natürliche Formen, wie beispielsweise Gesichter, Körper oder dergleichen, aufweisen.

Ferner wird für jedes Bildpixel des Quellbildes der jeweils zugeordnete Wert des Skalierungsfaktors ermittelt, wobei der Skalierungsfaktor im wesentlichen einerseits von der aus dem Abstand $A_0$ des jeweiligen Bildpixels $(x, y)$ von dem Anfangspunkt $(x_0, y_0)$ des Deformationsvektors und dem Abstand $A_1$ des jeweiligen Bildpixels von dem Endpunkt $(x_1, y_1)$ des Deformationsvektors gebildeten Summe $S = A_0 + A_1$ und andererseits von der Länge L des Deformationsvektors abhängig ist. Zur Realisierung des elliptischen Funktionsverlaufs des Skalierungsfaktors wird nach einer vorteilhaften Weiterbildung des erfindungsgemäßen Bildverarbeitungsverfahrens für jedes Bildpixel des Quellbildes der jeweils zugeordnete Wert des Skalierungsfaktors gemäß $1-((S-\alpha L)/(\alpha L))$ ermittelt, wobei $\alpha$ eine justierbare Konstante ist, und falls der jeweils ermittelte Wert größer als Null ist, dieser positive Wert dem jeweiligen Bildpixel zugewiesen wird, während andernfalls für dieses Bildpixel der Wert des Skalierungsfaktors auf Null gesetzt wird. Um ein Quellbild in ein demgegenüber deformiertes Zielbild zu transformieren, werden mit dem jeweiligen Wert des Skalierungsfaktors die jeweiligen Bildpixel des Zielbildes aus der koordinatenweisen Summenbildung der jeweils dazu korrespondierenden Bildpixel des Quellbildes mit dem koordinatenweise gebildeten Produkt des jeweils ermittelten Skalierungsfaktors mit dem Deformationsvektor ermittelt.

In einem daran anschließenden Verfahrensschritt werden in dem Zielbild aufgrund der Transformation auftretende Leerstellen mit neu generierten Bildpixeln aufgefüllt, indem aus den jeweiligen Farbdichtewerten von benachbart angeordneten Bildpixeln entsprechende Farbdichtewerte für die neu generierten Bildpixel interpoliert werden. Durch das Auffüllen von derart leeren Bereichen mit entsprechend aus den angrenzend dazu abgebildeten Bildpixeln gewinnt das Zielbild an Schärfe im Vergleich zu herkömmlichen Verfahren, bei denen derartige Bereiche mit Bildpixeln von einheitlichem Farbdichtewert aufgefüllt werden.

Weitere vorteilhafte Ausgestaltungen des erfindungsgemäßen Bildverarbeitungsverfahrens lassen sich den Unteransprüchen entnehmen.

In vorrichtungstechnischer Hinsicht wird die oben angegebene Aufgabe bei einer Vorrichtung zur Durchführung des Bildverarbeitungsverfahrens dadurch gelöst, daß innerhalb des Quellbildes ein eine Deformationsrichtung bestimmender Deformationsvektor definierbar ist und daß für die jeweiligen Bildpixel des Quellbildes nach Maßgabe einer von dem Deformationsvektor und einem die Lage der jeweiligen Bildpixel in Relation zu diesem Deformationsvektor berücksichtigenden Skalierungsfaktor funktional abhängigen Transformationsvorschrift jeweils eine korrespondierende Koordinatenposition in dem Zielbild ermittelbar ist. Dabei weist der Skalierungsfaktor einen im wesentlichen elliptischen Funktionsverlauf auf, wobei sich der Deformationsvektor ungefähr zwischen den Brennpunkten des elliptischen Funktionsverlaufs erstreckt. Indem zur Definition einer Deformation lediglich ein einzelner Vektor erforderlich ist, hat die erfindungsgemäße Vorrichtung einen relativ geringen Speicherplatzbedarf und läßt sich demgemäß vorteilhaft in Mikrocomputer-gestützten portablen bzw. mobilen Kleingeräten mit naturgemäß knappen Speicherplatzressourcen, jedoch auch eigenständig einsetzen.

Anhand der beigefügten Zeichnung soll nachstehend eine Ausführungsform des erfindungsgemäßen Verfahrens näher erläutert werden. In teilweise schematischen Ansichten zeigen:

Fig. 1 ein als Graustufenfotographie ausgebildetes Quellbild,

Fig. 2 ein aus dem Quellbild von Fig. 1 gemäß dem Stand der Technik gebildetes Zielbild,

Fig. 3 eine vereinfachte Darstellung eines innerhalb einer Quellbild-Pixelmatrix anhand seines Anfangs- und Endpunktes definierten Deformationsvektors gemäß einer Initialisierungsphase des erfindungsgemäßen Verfahrens,

Fig. 4 ein Eingabe/Ausgabe-Ablaufschema des erfindungsgemäßen Verfahrens, wobei als Eingabegrößen des Verfahrens die Quellbildpixelmatrix und die Koordinaten des Deformationsvektors eingespeist werden und als Ausgabegröße eine Zielbildpixelmatrix ermittelt wird,

Fig. 5 eine perspektivische Darstellung des Funktionsverlaufs eines Ausführungsbeispiels des zum erfindungsgemäßen Verfahren gehörenden Skalierungsfaktors,

Fig. 6 ein Höhenliniendiagramm des Funktionsverlaufs des Skalierungsfaktors von Fig. 5,

Fig. 7 ein aus dem Quellbild von Fig. 1 gemäß dem erfindungsgemäßen Verfahren gebildetes Zielbild vor einem abschließenden Interpolationsschritt, wobei ungefähr kreisförmig angeordnete Strukturaufhellungen Fehlstellen im Zielbild darstellen, sowie

Fig. 8 das Zielbild von Fig. 7 mit nach dem erfindungsgemäßen Verfahren durchgeführter Interpolation, durch welche aufgrund der Transformation entstandene Fehlstellen aufgefüllt wurden.

Das erfindungsgemäße Verfahren dient der deformierenden Bildverarbeitung eines aus Informationssignalen zusammengesetzten Ursprungs- oder Quellbildes, welches in ein demgegenüber deformiertes Zielbild transformiert wird.

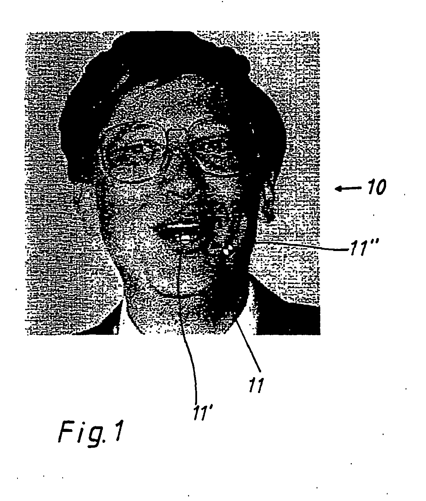

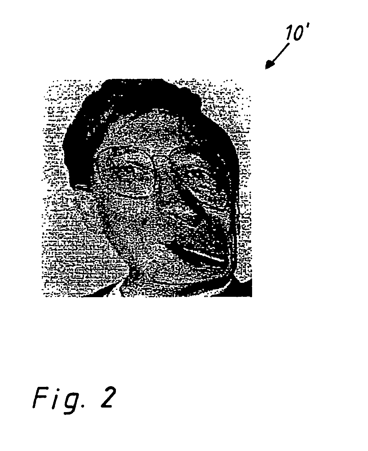

Fig. 1 zeigt ein Beispiel eines mit 10 bezeichneten Quellbildes. Demgegenüber zeigt Fig. 2 ein gegenüber dem Quellbild 10 deformiertes Zielbild 10', das nach einem Verfahren gemäß dem Stand der Technik transformiert wurde, indem das Quellbild 10 mit einem - hier nicht gesondert dargestellten - Netz oder Gitter von Polygonen versehen wird und das Gitter zusammen mit den zugeordneten Bildpixeln deformiert wird. Aufgrund der Vielzahl von dafür erforderlichen Vektoren haben diese herkömmlichen Verfahren einen hohen Speicherplatzbedarf und sind demgemäß sehr rechenintensiv. Zudem weist das dadurch gebildete Zielbild 10' aufgrund der Polygon-Deformation insgesamt kantige Strukturen auf.

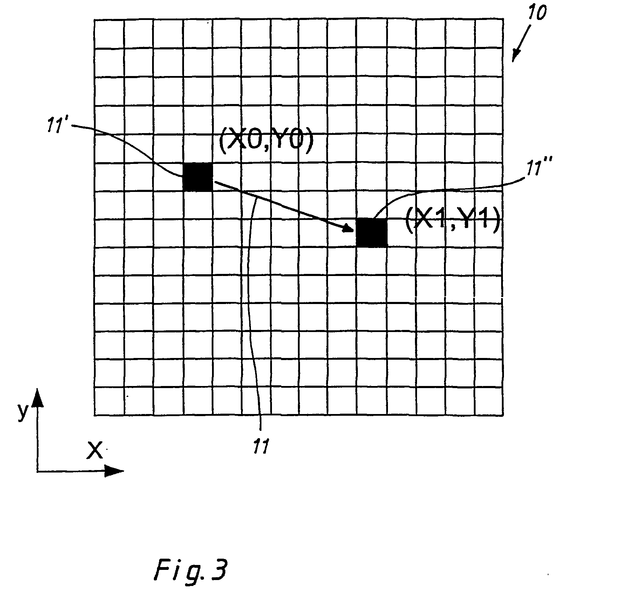

Hier setzt nun das erfindungsgemäße Verfahren an, indem während einer Initialisierungsphase in einem durch eine Pixelmatrix gekennzeichneten Quellbild 10 eine Deformations - bzw. Verzerrungsrichtung durch einen einzigen - in Fig. 3 dargestellten - Deformationsvektor 11 definiert bzw. festgelegt wird, wobei dieser Deformationsvektor 11 durch einen Anfangspunkt 11' mit den Anfangspunktkoordinaten $(x_0, y_0)$ und einen Endpunkt 11'' mit den Endpunktkoordinaten $(x_1, y_1)$ festgelegt wird und sowohl der Anfangspunkt 11' als auch der Endpunkt 11'' innerhalb der Pixelmatrix des Quellbildes 10 liegen. Diese Initialisierungsphase ist an dem in Fig. 1 dargestellten als Graustufenfotographie ausgebildeten Quellbild 10 mit einer Projektion eines Deformationsvektors 11 veranschaulicht.

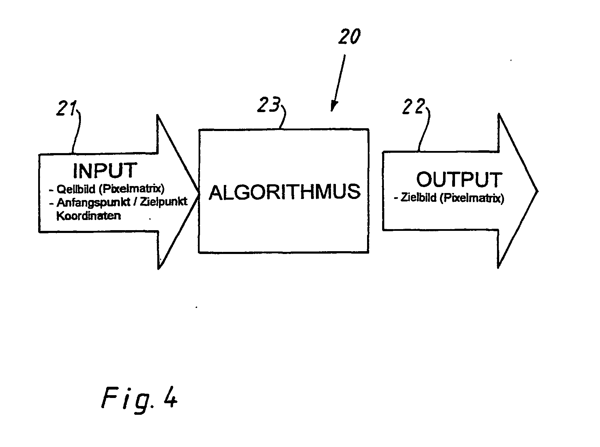

Fig. 4 zeigt ein prinzipielles Ablaufschema 20 des erfindungsgemäßen Verfahrens, wobei als Eingangsgrößen 21 die Pixelmatrix des Quellbildes 10 sowie die Koordinaten des Anfangspunktes 11' und des Endpunktes 11'' des Deformationsvektors 11 eingegeben werden, während als Ausgangsgröße 22 die Pixelmatrix des Zielbildes anhand einer Transformationsgleichung 23 ermittelt wird.

In diesem Verfahrensschritt wird für jedes Pixel $(x_Q, y_Q)$ aus der Pixelmatrix des Quellbildes 10 jeweils eine Koordinatenposition $(x_z, y_z)$ in der Pixelmatrix des Zielbildes ermittelt, wobei diesem Verfahrensschritt die nachstehende Transformationsgleichung in Matrizenform zugrundegelegt wird:

$$\begin{pmatrix} x_z \\ y_z \end{pmatrix} = \begin{pmatrix} x_Q \\ y_Q \end{pmatrix} + \begin{pmatrix} F(x_Q, y_Q, K) & 0 \\ 0 & F(x_Q, y_Q, K) \end{pmatrix} \begin{pmatrix} x_1 - x_0 \\ y_1 - y_0 \end{pmatrix}$$

Dabei weist die rechte Seite der Transformationsgleichung als Eingangsgrößen 21 die jeweiligen Pixel ($x_Q$, $y_Q$) der Matrix des Quellbildes 10 sowie den durch die Differenz zwischen den Koordinaten des Anfangs- und des Endpunktes ($x_0$, $y_0$) bzw. ($x_1$, $y_1$) definierten Deformationsvektor 11 ($x_1 - x_0$, $y_1 - y_0$) und einen Skalierungsfaktor $F(x,y,K)$ auf, während demgegenüber die linke Seite der Transformationsgleichung als Ausgangsgrößen 22 die jeweils zugeordneten Pixel ($x_z$, $y_z$) der Matrix des Zielbildes wiedergibt; der Skalierungsfaktor ist jeweils als Hauptdiagonalelement einer (2x2)-Matrix aufgenommen, deren Außerdiagonalelemente jeweils die Null aufweisen, wobei das Produkt aus der (2x2)-Matrix und dem Deformationsvektor 11 addiert mit den Koordinaten des jeweiligen Quellbildpixels ($x_Q$, $y_Q$) das jeweils dazu korrespondierende Zielbildpixel ($x_z$, $y_z$) ergibt. Der in der Transformationsgleichung aufgenommene Skalierungsfaktor $F(x,y,K)$ ist funktional abhängig vom relativen Abstand des jeweiligen Pixels ($x$, $y$) des Quellbildes bezüglich des Anfangspunktes ($x_0$, $y_0$) und des Endpunktes ($x_1$, $y_1$) des Deformationsvektors 11 sowie einer Größe K:

$$F(x,y,K) = 1 - \frac{\sqrt{(x - x_0)^2 + (y - y_0)^2} + \sqrt{(x - x_1)^2 + (y - y_1)^2} - K}{K}$$

Nimmt dieser Ausdruck für ein jeweils eingegebenes Pixel ($x$, $y$) des Quellbildes 10 einen Wert $F > 0$ ein, so wird dieser positive Wert diesem Pixel zugeordnet und abgespeichert, während andernfalls dieser Wert auf $F = 0$ gesetzt wird. Dabei ist die Größe K einerseits von der Länge des Deformationsvektors 11 und andererseits von einer justierbaren Konstante $\alpha$ abhängig, wobei für K folgende Beziehung gilt:

$$K = \alpha \sqrt{(x_1 - x_0)^2 + (y_1 - y_0)^2}$$

Somit werden bei der Transformation die jeweiligen Pixel des Quellbildes 10 nach Maßgabe von deren jeweiligen Abständen zu Anfangs- und Endpunkt 11', 11'' in Richtung des durch den Anfangspunkt 11' und den Endpunkt 11'' bestimmten Deformationsvektors 11 verschoben. Der Grad der Verschiebung bzw. Verzerrung ist abhängig von dem in der Transformationsgleichung aufgeführten Skalierungsfaktor $F(x,y,K)$, welcher im wesentlichen aus der Summe der Abstände der jeweiligen Pixel zu Anfangs- und Endpunkt 11', 11'' in Relation zur Länge des Deformationsvektors 11 ermittelt wird, so daß Pixel, die in unmittelbarer Nähe zum Vektor 11, d.h. zum Anfangs- und Endpunkt, angeordnet sind, eine stärkere Verschiebung erfahren als solche Pixel, die in größeren Abständen dazu angeordnet sind, während Pixel mit sehr großem Abstand zum Deformationsvektor 11 praktisch unverschoben bleiben.

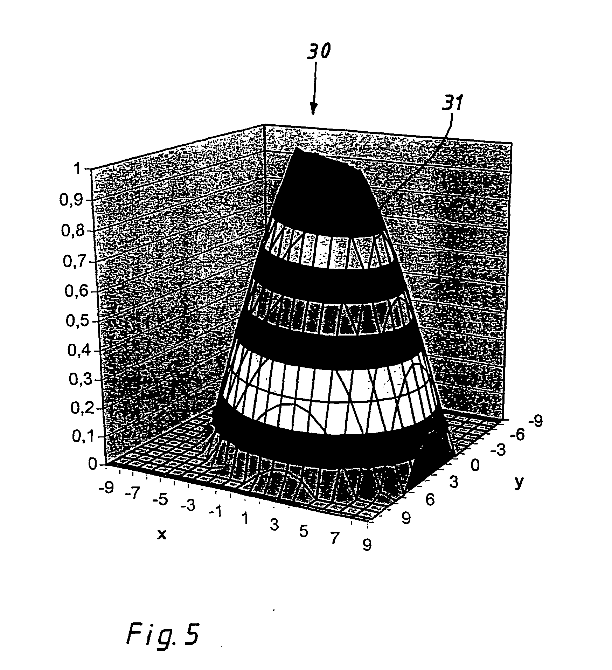

Fig. 5 veranschaulicht in einer perspektivischen Darstellung 30 den graphischen Funktionsverlauf des Skalierungsfaktors 31, wobei im Ausführungsbeispiel für die Parameter $\alpha$ und K die Werte $\alpha = 1$ bzw. K=8.6023 gewählt wurden und der Deformationsvektor mit seinen Anfangspunktkoordinaten (-2, -2) und seinen Endpunktkoordinaten (3, 5) definiert ist.

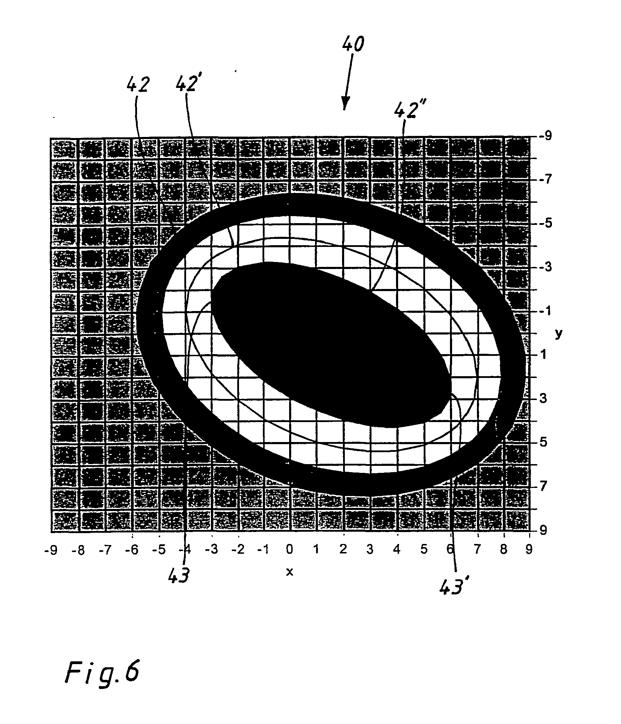

Fig. 6 veranschaulicht in einem Höhenliniendiagramm 40 den Funktionsverlauf des Skalierungsfaktors 31. Aus diesem Diagramm 40 ist anhand mehrerer elliptisch verlaufender Höhen- oder Äquipotentiallinien 42, 42', 42'' ersichtlich, daß die Skalierungsfaktorfunktion 31 einen elliptischen Querschnitt aufweist. Die Brennpunkte 43, 43' einer derartigen Ellipse fallen jeweils mit dem Anfangs- und Endpunkt 11' bzw. 11'' des Deformationsvektors 11 zusammen. Pixel, die auf einer derartigen Ellipse mit Anfangspunkt 11' und Endpunkt 11'' des Deformationsvektors 11 als Brennpunkte 43, 43' liegen, werden gleichmäßig verschoben.

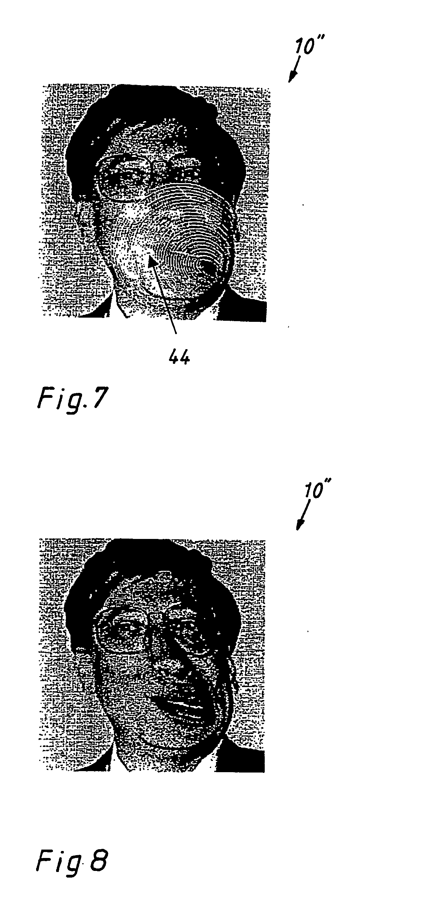

In einem weiteren Verfahrensschritt werden in der Zielabbildung, d.h. in der Pixelmatrix des Zielbildes 10'', aufgrund der Transformation entstehende Lücken, die in Fig. 7 durch kreisförmige Strukturaufhellungen 44 ersichtlich sind, ausgefüllt. Bei diesen Lücken handelt es sich um Bereiche im Zielbild 10'', in welche keine Pixel oder nur sehr wenige Pixel des Quellbildes 10 abgebildet wurden, so daß diese Bereiche im Zielbild 10'' keine Korrespondenz im Quellbild 10 aufweisen. Diese Bereiche des Zielbildes 10'' werden in diesem Verfahrensschritt mit neu generierten Pixeln aufgefüllt, indem angrenzend zu diesen leeren Bereichen angeordnete transformierte Pixel ermittelt werden und aus deren jeweils zugeordneten Farbdichtewerten für die neu zu generierenden Pixel die jeweils korrespondierenden Farbdichtewerte durch Interpolation ermittelt, zugeordnet und abgespeichert werden. Fig. 8 zeigt das Zielbild 10'', bei dem diese Interpolation durchgeführt wurde; aufgrund der vorstehend erläuterten Eigenschaften der Skalierungsfaktorfunktion weist das Zielbild 10'' runde Strukturen in den deformierten Bereichen auf, so daß sich das Verfahren vorteilhaft zur Darstellung natürlicher Formen eignet.

**Patentansprüche**

1. Bildverarbeitungsverfahren zur optischen Anzeige von Informationen und/oder Signalen, wobei ein Quellbild in ein demgegenüber verzerrtes oder deformiertes Zielbild transformiert wird, **dadurch gekennzeichnet, daß** innerhalb des Quellbildes (10) ein eine Deformationsrichtung bestimmender Deformationsvektor (11) definiert wird und daß für die jeweiligen Bildpixel des Quellbildes (10) nach Maßgabe einer von dem Deformationsvektor (11) und einem die Lage der jeweiligen Bildpixel in Relation zu diesem Deformationsvektor (11) berücksichtigenden Skalierungsfaktor (31) funktional abhängigen Transformationsvorschrift (23) jeweils eine korrespondierende Koordinatenposition in dem Zielbild (10'') ermittelt wird.

2. Bildverarbeitungsverfahren nach Anspruch 1, **dadurch gekennzeichnet, daß** dem Skalierungsfaktor (31) ein im wesentlichen elliptischer Funktionsverlauf derart zugeordnet wird, daß sich der Deformationsvektor (11) ungefähr zwischen den Brennpunkten (43, 43') des elliptischen Funktionsverlaufs erstreckt.

3. Bildverarbeitungsverfahren nach Anspruch 1 oder 2, **dadurch gekennzeichnet, daß** für jedes Bildpixel des Quellbildes (10) der jeweils zugeordnete Wert des Skalierungsfaktors (31) ermittelt wird, wobei der Skalierungsfaktor (31) im wesentlichen einerseits von der aus dem Abstand $A_0$ des jeweiligen Bildpixels (x, y) von dem mit den Koordinaten $(x_0, y_0)$ bezeichneten Anfangspunkt (11') des Deformationsvektors (11) und dem Abstand $A_1$ des jeweiligen Bildpixels von dem mit den Koordinaten $(x_1, y_1)$ bezeichneten Endpunkt (11'') des Deformationsvektors (11) gebildeten Summe $S = A_0 + A_1$ und andererseits von der Länge L des Deformationsvektors (11) abhängig ist.

4. Bildverarbeitungsverfahren nach Anspruch 3, **dadurch gekennzeichnet, daß** für jedes Bildpixel des Quellbildes (10) der jeweils zugeordnete Wert des Skalierungsfaktors (31) gemäß $1-((S-\alpha L)/(\alpha L))$ ermittelt wird, wobei $\alpha$ eine justierbare Konstante ist, und falls der jeweils ermittelte Wert größer als Null ist, dieser positive Wert dem jeweiligen Bildpixel zugewiesen wird, während andernfalls für dieses Bildpixel der Wert des Skalierungsfaktors (31) auf Null gesetzt wird.

5. Bildverarbeitungsverfahren nach einem der Ansprüche 2 bis 4, **dadurch gekennzeichnet, daß** die jeweiligen Bildpixel des Zielbildes (10'') aus der koordinatenweisen Summenbildung der jeweils dazu korrespondierenden Bildpixel des Quellbildes (10) mit dem koordinatenweise gebildeten Produkt des jeweils ermittelten Skalierungsfaktors (31) mit dem Deformationsvektor (11) ermittelt werden.

6. Bildverarbeitungsverfahren nach einem der Ansprüche 2 bis 5, **dadurch gekennzeichnet, daß** als Abstand $A_0$ des jeweiligen Bildpixels (x, y) von dem mit den Koordinaten $(x_0, y_0)$ bezeichneten Anfangspunkt (11') des Deformationsvektors (11) und als Abstand $A_1$ des jeweiligen Bildpixels von seinem mit den Koordinaten $(x_1, y_1)$ bezeichneten Endpunkt (11'') die Beziehung $A_0 = ((x-x_0)^2 + (y-y_0)^2)^{1/2}$ bzw. $A_1 = ((x-x_1)^2 + (y-y_1)^2)^{1/2}$ definiert wird.

7. Bildverarbeitungsverfahren nach einem der Ansprüche 1 bis 6, **dadurch gekennzeichnet, daß** die Länge des Deformationsvektors (11) nach der Beziehung $L = ((x_1-x_0)^2 + (y_1-y_0)^2)^{1/2}$ berechnet wird.

8. Verfahren nach einem der Ansprüche 1 bis 7, **dadurch gekennzeichnet, daß** in dem Zielbild (10'') aufgrund der Transformation auftretende Leerstellen mit neu generierten Bildpixeln aufgefüllt werden, indem aus den jeweiligen Farbdichtewerten von benachbart angeordneten Bildpixeln entsprechende Farbdichtewerte für die neu generierten Bildpixel interpoliert werden.

9. Vorrichtung zur Durchführung des Bildverarbeitungsverfahrens insbesondere nach einem der Ansprüche 1 bis 8, **dadurch gekennzeichnet, daß** innerhalb des Quellbildes (10) ein eine Deformationsrichtung bestimmender Deformationsvektor (11) definierbar ist und daß für die jeweiligen Bildpixel des Quellbildes (10) nach Maßgabe einer von dem Deformationsvektor (11) und einem die Lage der jeweiligen Bildpixel in Relation zu diesem Deformationsvektor (11) berücksichtigenden Skalierungsfaktor (31) funktional abhängigen Transformationsvorschrift (23) jeweils eine korrespondierende Koordinatenposition in dem Zielbild (10'') ermittelbar ist.

**10.** Vorrichtung nach Anspruch 9, **dadurch gekennzeichnet, daß** der Skalierungsfaktor (31) einen im wesentlichen elliptischen Funktionsverlauf aufweist, wobei sich der Deformationsvektor (11) ungefähr zwischen den Brennpunkten (43, 43') des elliptischen Funktionsverlaufs erstreckt.

## Claims

**1.** Image processing method for visually displaying information and/or signals, a source image being transformed into a distorted or warped target image relative to said source image, **characterised in that** a deformation vector (11) which determines a deformation direction is defined within the source image (10) and a corresponding coordinate position is determined in the target image (10'') for each pixel of the source image (10) according to a transformation rule (23) that is functionally dependent on said deformation vector (11) and on a scaling factor (31) that takes account of the position of each pixel in relation to the deformation vector (11).

**2.** Image processing method according to claim 1, **characterised in that** an essentially elliptical function curve is assigned to the scaling factor (31) in such a way that the deformation vector (11) extends approximately between the foci (43, 43') of the elliptical function curve.

**3.** Image processing method according to claim 1 or 2, **characterised in that** the assigned scaling factor value (31) is determined for each source image pixel (10), said scaling factor (31) being essentially dependent, on the one hand, on the sum $S = A_0 + A_1$ of the distance $A_0$ of the relevant image pixel $(x, y)$ from the starting point (11'), designated by the coordinates $(x_0, y_0)$, of the deformation vector (11) and the distance $A_1$ of the relevant image pixel from the end point (11''), designated by the coordinates $(x_1, y_1)$, of the deformation vector and, on the other hand, on the length L of the deformation vector (11).

**4.** Image processing method according to claim 3, **characterised in that** the assigned value of the scaling factor (31) is determined according to $1-((S-\alpha L)/(\alpha L))$ for each pixel of the source image (10), $\alpha$ being an adjustable constant, and if the value determined in each case is greater than zero, this positive value is assigned to the relevant pixel, whereas, if not, the value of the scaling factor (31) is set to zero for this pixel.

**5.** Image processing method according to one of claims 2 to 4, **characterised in that** the relevant pixels of the target image (10'') are determined from coordinate summation of the corresponding pixels of the source image (10) with the coordinate-formed product of the scaling factor (31) determined in each case and the deformation vector (11).

**6.** Image processing method according to one of claims 2 to 5, **characterised in that** the relations $A_0 = ((x-x_0)^2 + (y-Y_0)^2)^{1/2}$ and $A_1 = ((x-x_1)^2 + (y-y_1)^2)^{1/2}$ are respectively defined as the distance $A_0$ of the relevant image pixel $(x, y)$ from the starting point (11'), designated by the coordinates $(x_0, y_0)$, of the deformation vector (11) and as the distance $A_1$ of the relevant pixel from its end point (11) designated by the coordinates $(x_1, y_1)$.

**7.** Image processing method according to one of claims 1 to 6, **characterised in that** the length of the deformation vector (11) is calculated according to the relation $L = ((x_1-x_0)^2 + (y_1-y_0)^2)^{1/2}$.

**8.** Method according to one of claims 1 to 7, **characterised in that** voids occurring in the target image (10'') because of the transformation are filled in with newly generated pixels by interpolating corresponding colour density values for the newly generated pixels from the relevant colour density values of adjacently disposed pixels.

**9.** Arrangement for performing the image processing method, in particular according to one of claims 1 to 8, **characterised in that** a deformation vector (11) which determines a deformation direction can be defined within the source image (10) and a corresponding coordinate position can be determined in the target image (10'') for each pixel of the source image (10) according to a transformation rule (23) that is functionally dependent on said deformation vector (11) and on a scaling factor (31) that takes account of the position of each pixel in relation to the deformation vector (11).

**10.** Arrangement according to claim 9, **characterised in that** the scaling factor (31) has an essentially elliptical function curve, the deformation vector (11) extending approximately between the foci (43, 43') of the elliptical function curve.

**Revendications**

1. Procédé de traitement d'images pour l'affichage optique d'informations et/ou de signaux, une image source étant transformée en une image cible distordue ou déformée par rapport à celle-ci, **caractérisé en ce qu'**est défini, à l'intérieur de l'image source (10), un vecteur de déformation (11) définissant un sens de déformation et **en ce qu'**est déterminé, pour les pixels d'image respectifs de l'image source (10), respectivement une position de coordonnées correspondante dans l'image cible (10"), selon une règle de transformation (23) en dépendance fonctionnelle du vecteur de déformation (11) et d'un facteur d'échelle (31) qui tient compte de la position des pixels d'image respectifs en relation avec ce vecteur de déformation (11).

2. Procédé de traitement d'images selon la revendication 1, **caractérisé en ce qu'**un tracé de fonction sensiblement elliptique est associé de telle manière au facteur d'échelle (31) que le vecteur de déformation (11) s'étend approximativement entre les foyers (43, 43') du tracé de fonction elliptique.

3. Procédé de traitement d'images selon la revendication 1 ou 2, **caractérisé en ce qu'**est déterminée, pour chaque pixel d'image de l'image source (10), la valeur respectivement associée du facteur d'échelle (31), le facteur d'échelle (31) dépendant, pour l'essentiel, d'une part de la somme $S = A_0 + A_1$ formée à partir de la distance $A_0$ entre le pixel d'image (x, y) respectif et le point de départ (11') du vecteur de déformation (11) désigné par les coordonnées $(x_0, y_0)$ et de la distance $A_1$ entre le pixel d'image respectif et le point final (11") du vecteur de déformation (11) désigné par les coordonnées $(x_1, y_1)$ et, d'autre part, de la longueur L du vecteur de déformation (11).

4. Procédé de traitement d'images selon la revendication 3, **caractérisé en ce qu'**est déterminée, pour chaque pixel d'image de l'image source (10), la valeur respectivement associée du facteur d'échelle (31) selon $1-((S-\alpha L)/(\alpha L))$, $\alpha$ étant une constante ajustable, et, si la valeur respectivement déterminée est supérieure à zéro, cette valeur positive est affectée au pixel d'image respectif tandis que, dans le cas contraire, pour ce pixel d'image, la valeur du facteur d'échelle (31) est mise à zéro.

5. Procédé de traitement d'images selon l'une des revendications 2 à 4, **caractérisé en ce que** les pixels d'image respectifs de l'image cible (10") sont déterminés à partir de la formation de la somme, pour chacune des coordonnées, des pixels d'image de l'image source (10) respectivement correspondants avec le produit, formé pour chacune des coordonnées, du facteur d'échelle respectivement déterminé (31) avec le vecteur de déformation (11).

6. Procédé de traitement d'images selon l'une des revendications 2 à 5, **caractérisé en ce qu'**est définie, en tant que distance $A_0$ entre le pixel d'image (x, y) respectif et le point de départ (11') du vecteur de déformation (11) désigné par les coordonnées $(x_0, y_0)$ et en tant que distance $A_1$ entre le pixel d'image respectif et son point final (11") désigné par les coordonnées $(x_1, y_1)$, la relation $A_0 = ((x-x_0)^2 + (y-y_0)^2)^{1/2}$ resp. $A_1 = ((x-x_1)^2 + (y-y_1)^2)^{1/2}$.

7. Procédé de traitement d'images selon l'une des revendications 1 à 6, **caractérisé en ce que** la longueur du vecteur de déformation (11) est calculée selon la relation $L = ((x_1-x_0)^2 + (y_1-y_0)^2)^{1/2}$.

8. Procédé selon l'une des revendications 1 à 7, **caractérisé en ce que**, dans l'image cible (10"), des positions vides qui se présentent en raison de la transformation sont comblées par des pixels d'image, nouvellement générés, par interpolation, à partir des valeurs respectives de la densité chromatique de pixels d'image voisins, de valeurs correspondantes de la densité chromatique pour les pixels d'image nouvellement générés.

9. Dispositif permettant d'exécuter le procédé de traitement d'images, en particulier selon l'une des revendications 1 à 8, **caractérisé en ce qu'**est définissable, à l'intérieur de l'image source (10), un vecteur de déformation (11) définissant un sens de déformation et **en ce qu'**est déterminable, pour les pixels d'image respectifs de l'image source (10), respectivement une position de coordonnées correspondante dans l'image cible (10"), selon une règle de transformation (23) en dépendance fonctionnelle du vecteur de déformation (11) et d'un facteur d'échelle (31) qui tient compte de la position des pixels d'image respectifs en relation avec ce vecteur de déformation (11).

10. Dispositif selon la revendication 9, **caractérisé en ce que** le facteur d'échelle (31) présente un tracé de fonction sensiblement elliptique, le vecteur de déformation (11) s'étendant approximativement entre les foyers (43, 43') du tracé de fonction elliptique.

*Fig. 1*

Fig. 2

*Fig.3*

*20*

*21*

INPUT
- Qellbild (Pixelmatrix)
- Anfangspunkt / Zielpunkt
  Koordinaten

*23*

ALGORITHMUS

*22*

OUTPUT
- Zielbild (Pixelmatrix)

*Fig. 4*

Fig. 5

Fig.6

10"

44

Fig.7

10"

Fig.8